# EUROPÄISCHE PATENTSCHRIFT

(11) **EP 3 835 840 B1**
(45) Veröffentlichungstag und Bekanntmachung des Hinweises auf die Patenterteilung: **28.09.2022**
(21) Anmeldenummer: 20201433.8
(22) Anmeldetag: 13.10.2020
(51) Int. Cl.: G02B 6/44, H02G 3/22

(54) **VORRICHTUNG ZUM DURCHFÜHREN WENIGSTENS EINES GLASFASER-KABELS DURCH EINE WANDBOHRUNG**
DEVICE FOR GUIDING AT LEAST ONE FIBRE OPTIC CABLE THROUGH A WALL OPENING
DISPOSITIF DE PASSAGE D'AU MOINS UN CÂBLE EN FIBRE OPTIQUE À TRAVERS UN ALÉSAGE MURAL

(30) Priorität: 10.12.2019 DE 102019133788
(43) Veröffentlichungstag der Anmeldung: 16.06.2021
(73) Patentinhaber: Langmatz GmbH, 82467 Garmisch-Partenkirchen (DE)
(72) Erfinder:
(74) Vertreter: Flosdorff, Jürgen

(56) Entgegenhaltungen:
- EP-A1- 2 405 170
- EP-A1- 2 410 222
- EP-B1- 2 410 222
- DE-A1-102011 078 561
- DE-B4-102011 078 561

## Beschreibung

Die Erfindung betrifft eine Vorrichtung zum Durchführen wenigstens eines Glasfaser-Kabels durch eine durch eine Gebäudewand führende Wandbohrung, mit einem die Bohrung an der Gebäudeaußenseite überdeckenden, an der Gebäudewand anliegenden äußeren Klemmkörper, der ein Loch zum Durchführen des Kabels hat, und mit einem die Bohrung an der Gebäudeinnenseite überdeckenden, an der Gebäudewand anliegenden inneren Klemmkörper.

Die EP 2 405 170 A1 offenbart eine Vorrichtung zum Durchführen wenigstens einer Leitung wie eines Kabels, eines Kabelschutzrohres, einer Gasleitung oder dergleichen durch eine Wandbohrung, wobei die Vorrichtung einen äußeren und einen inneren Klemmkörper hat, die beide einen identischen Aufbau haben. Diese Klemmkörper bestehen aus drei Hauptbestandteilen, nämlich aus einer Kanalstruktur, einer Montageanlageplatte und einem Spannmechanismus, der seinerseits aus einer Spannstange und einem Schnellspanner gebildet ist. Die Kanalstruktur hat zwei Durchgangskanäle, die einstückig miteinander verbunden sind, nämlich einen Leitungskanal, durch den die Leitung hindurch geführt wird, und einen Spannstangenkanal, in dem die Spannstange angeordnet ist. Die Kanalstruktur wird so in die Wandbohrung eingesetzt, dass das Eindringen von Feuchtigkeit und Wasser zwischen der Wandbohrung und der Kanalstruktur verhindert ist. Dies wird durch Dichtungsabschnitte erreicht, die in die Umfangswand der Kanalstruktur integriert sind und die durch Anziehen der Spannstange radial nach außen expandieren und sich an die Innenwand der Wandbohrung anpressen.

Aus der EP 2 410 222 A1 ist eine Vorrichtung zum Befestigen und Abdichten einer durch eine Wandöffnung einer Gebäudewand führenden Leitung bekannt, wobei es sich bei der Leitung um ein Leerrohr handelt, das beispielsweise ein Wasserrohr, ein Gasrohr oder eine Telekommunikationsleitung aufnimmt. Dieses Leerrohr erfordert eine Wandbohrung bzw. Kernlochbohrung eines Durchmessers von wenigstens 40mm, deren Ausbildung mit einem beträchtlichen Aufwand verbunden ist.

Die vorliegende Erfindung sieht dagegen vor, wenigstens ein Glasfaser-Kabel ohne ein derartiges größeres Leerrohr oder Schutzrohr durch die Wandbohrung hindurch zu führen, so dass die Wandbohrung nur einen Durchmesser von etwa 25 oder 26 mm haben muss.

Wenn ein Glasfaser-Kabel auf derartige Weise in ein Gebäude eingeführt werden soll, muss es in der Wand mechanisch befestigt werden, und der Zwischenraum zwischen dem Glasfaser-Kabel und der Wand muss gegen den Durchtritt von Wasser und möglichst auch Gas abgedichtet werden. Hierzu ist es aus der EP 2 410 222 A1 bekannt, das Leerrohr mit einem Lochrohr größeren Durchmessers zu umgeben. In dieses Lochrohr wird gemäß der EP 2 410 222 A1 eine zunächst fließfähige, dann aufschäumende und erhärtende Füllsubstanz eingefüllt, die aus einer Vielzahl von über den Umfang verteilten kleinen Löchern aus den umgebenden Rohr austritt und Hohlräume in der Wandbohrung ausfüllt, so dass der Zwischenraum der Wandbohrung abgedichtet wird.

Da die Wandbohrung zum Durchführen eines Glasfaser-Kabels nur einen verhältnismäßig kleinen Durchmesser hat, kann diese Wandbohrung durch eine Handbohrmaschine hergestellt werden, was mit einem verringerten Arbeitsaufwand verbunden ist. Dieser von Hand ausgeführte Vorgang führt allerdings dazu, dass der Verlauf der Bohrung durch die Wand variieren kann. Die Bohrung kann sowohl horizontal als auch in einem variierenden Winkel zur Horizontalen verlaufen, wobei letzteres stets dann der Fall ist, wenn das Gebäude keinen Keller hat, so dass dann die Bohrung von außen nach innen schräg nach oben verläuft.

Bei den bisherigen Vorrichtungen zum Durchführen einer Leitung durch eine Gebäudewand müssen für den verschiedenen Verlauf der Wandbohrung angepasste Klemmkörper bereitgestellt werden, die dicht an die Wand anpressbar sind.

Der vorliegenden Erfindung liegt eine erste Teilaufgabe zugrunde, eine Vorrichtung der betrachteten Art anzugeben, die sowohl zum Befestigen und Abdichten einer horizontalen Wandbohrung als auch einer schräg verlaufenden Wandbohrung verwendbar ist.

Diese Teilaufgabe wird dadurch gelöst, dass der innere Klemmkörper vorzugsweise aus einem thermoplastischen Kunststoff besteht, der an definierten Stellen bevorzugt mit geringerer Wandstärke derart verformbar bzw. biegbar ist, dass der innere Klemmkörper sowohl bei horizontaler als auch schräg durch die Gebäudewand führender Bohrung dicht an die Gebäudewand anpressbar ist. Als ein geeigneter Kunststoff wird vorzugsweise ABS verwendet, das bei größerer Wandstärke im wesentlichen starr ist, aber bei geringer Wandstärke verformbar bzw. biegbar ist. Wichtig dabei ist, dass der innere Klemmkörper bei jedem auftretenden Verlauf der Bohrung durch die Wand mit einem umlaufenden Randabschnitt dicht und fest an die Wandoberfläche anpressbar ist.

Weiter ist erfindungsgemäß vorgesehen, dass mit der Innenseite des äußeren Klemmkörpers ein Lochrohr verbunden ist, das das Glasfaser-Kabel in der Bohrung wenigstens über einen Teil seiner Länge mit radialem Abstand umgibt und das bevorzugt aus demselben Material wie der innere Klemmkörper besteht. Das Lochrohr ist schwenkbar mit dem äußeren Klemmkörper verbunden, so dass es bei an der Wand mit dem umlaufenden Randabschnitt dicht anliegendem Klemmkörper auf den jeweiligen Verlauf der Wandbohrung ausgerichtet werden kann. Das Lochrohr kann dabei in seinem unteren Bereich der Einbaulage geschlossen sein und in den darüber liegenden Bereichen kleine Löcher oder Schlitze haben, so dass die in das Lochrohr einzufüllende Dichtungssubstanz nicht wirkungslos in der Wandbohrung nach unten ablaufen kann.

Weiter sieht die Erfindung vor, dass der innere Klemmkörper einen rohrförmigen Abschnitt hat, der in die Bohrung eingesetzt wird. Hierbei ist der rohrförmige

Abschnitt vorteilhafterweise nach Art eines Dübels mit außen abstehenden Flügeln ausgebildet, wodurch dieser Abschnitt klemmend in die Bohrung einsetzbar ist.

Der innere Klemmkörper hat außerdem einen im unbelasteten Zustand im Winkel von etwa 90° zu dem rohrförmigen Abschnitt verlaufenden rahmenartigen Abschnitt mit einem Rand, der dicht an die Gebäudewand anpressbar ist, wobei der rohrförmige Abschnitt und der rahmenartige Abschnitt durch biegbare bzw. verformbare Stege oder Wandabschnitte einstückig miteinander verbunden sein können. Diese biegbaren Stege bestehen vorteilhafterweise aus demselben Material wie der übrige innere Klemmkörper, haben jedoch eine so dünne Wandstärke, dass der Winkel zwischen dem rohrförmigen Abschnitt und dem rahmenartigen Abschnitt veränderbar ist, wobei diese beiden Abschnitte aufgrund ihrer größeren Wandstärke im wesentlichen starr sind.

Der rohrförmige Abschnitt kann sich außerhalb der Bohrung querschnittlich U-förmig fortsetzen mit dem rahmenartigen Abschnitt zugewandter Öffnung, so dass das Glasfaser-Kabel nach oben zu dem rahmenartigen Abschnitt hin gebogen werden kann. Der rahmenartige Abschnitt hat in einer bevorzugten Ausführungsform zwei Stegpaare, deren Stege so beabstandet sind, dass zwischen ihnen das wenigstens eine Glasfaser-Kabel hindurchgeführt und gehalten werden kann.

Der äußere Klemmkörper, der bevorzugt im wesentlichen die Form eines Tellers hat, dessen Rand dicht an die Gebäudewand angepresst wird, hat ein bevorzugt mittiges Loch zum Einsetzen des Lochrohres und zum Durchführen des wenigstens einen Glasfaser-Kabels.

Wenn ein Glasfaser-Kabel von der Außenseite eines Gebäudes aus durch eine Wandbohrung zu dessen Innenseite geführt wird, wird zunächst das Ende des Glasfaser-Kabels durch das in die Aussparung des äußeren Klemmkörpers eingesetzte Lochrohr und damit durch den äußeren Klemmkörper hindurch zur Innenseite der Gebäudewand geführt, und dort durch den rohrförmigen Abschnitt des inneren Klemmkörpers und den anschließenden rahmenartigen Abschnitt geführt, woraufhin der rohrfömige Abschnitt in die Bohrung der Gebäudewand eingesetzt und der rahmenartige Abschnitt an die Gebäudewand angepresst wird. Daraufhin wird das Glasfaser-Kabel in der benötigten Länge durch die Klemmkörper nach innen gezogen, woraufhin die aufschäumende Füllsubstanz in das Lochrohr eingefüllt wird.

Diese Vorgehensweise ist dann nicht möglich, wenn das Glasfaser-Kabel zunächst an der Gebäudeinnenseite montiert und dann durch die Wandbohrung zur Außenseite des Gebäudes geführt wird, wo das Glasfaser-Kabel bereits mit einer fest angebrachten Muffe und am Kabelende mit einem Stecker versehen sein kann, mit dem das Kabel in einem späteren Vorgang mit einem außerhalb des Gebäudes angeordneten Glasfaser-Abschlusspunkt verbunden wird. Der Stecker und insbesondere die Muffe, die einen erheblich größeren Außenumfang als das Glasfaser-Kabel hat - vorzugsweise ca. 18 mm, während das Kabel nur etwa halb so dick ist - können nicht auf die oben beschriebene Weise durch die beiden Klemmkörper hindurchgeführt werden.

Der vorliegenden Erfindung liegt die zusätzliche Aufgabe zugrunde, die Vorrichtung so zu gestalten, dass sie auf ein zuvor durch die Wandbohrung hindurchgeführtes Glasfaser-Kabel aufsetzbar ist und dieses vorinstallierte Glasfaser-Kabel dicht durch die Wandbohrung hindurch führen kann.

Die gesamte Aufgabe wird durch die Merkmale des Patentanspruchs 1 gelöst.

Vorteilhafte Ausgestaltung der Erfindung sind in den Unteransprüchen gekennzeichnet.

Bei der erfindungsgemäßen Vorrichtung hat der rohrförmige Abschnitt des inneren Klemmkörpers am Randbereich eine nach außen offene, sich in Längsrichtung des rohrförmigen Abschnitts erstreckende Einbuchtung, in die das Glasfaser-Kabel von außen einlegbar ist. Der rahmenartige Abschnitt des inneren Klemmkörper hat dabei eine Öffnung, durch die das Glasfaser-Kabel zum Einlegen in die Einbuchtung des rohrförmigen Abschnitts gelangt. Auf diese Weise ist das Glasfaser-Kabel auf den inneren Klemmkörper aufsetzbar, wonach dieser in die Wandbohrung einsetzbar ist. Die Einbuchtung kann durch das eingelegte Glasfaser-Kabel vollständig ausgefüllt sein.

Auf der Gebäudeaußenseite wird der äußere Klemmkörper über den Stecker und die Muffe geführt, was problemlos möglich ist, weil dessen Loch bzw. Aussparung hierzu groß genug ist. Anschließend wird das Lochrohr im aufgeklappten Zustand auf das Glasfaser-Kabel aufgesetzt, woraufhin dieses geschlossen und mit seinem Endabschnitt durch die Aussparung des äußeren Klemmkörpers hindurchgeführt wird. Der äußere Klemmkörper wird nun an die Gebäudewand angepresst, womit das Glasfaser-Kabel durch die Wandbohrung hindurchgeführt ist.

Bevor die aufschäumende Füllsubstanz in ein hierzu vorgesehenes Loch eingefüllt wird, kann in einer vorteilhaften Ausgestaltung der Erfindung ein aufklappbarer Dichtungskörper auf den Endabschnitt des geschlossenen Lochrohres aufgesetzt werden, der verhindert, dass ein Teil der aufschäumenden Füllsubstanz außerhalb der Wandbohrung austritt.

Dieser Dichtungskörper kann durch ein Filmscharnier aufklappbar und durch einen Schnappverschluss schließbar sein. Der Innenraum des geschlossenen Dichtungskörpers sollte bis auf eine Durchgangsöffnung für das Glasfaser-Kabel durch eine Innenwand abgedichtet sein.

Die aufgeschäumte Füllsubstanz kann auch an dem inneren Klemmkörper nicht aus der Wandbohrung austreten, da der rohrförmige Abschnitt mit dem in die Einbuchtung eingelegten Glasfaser-Kabel die Wandbohrung praktisch ausfüllt.

Die zunächst fließfähige, dann aufschäumende und schließlich erhärtende Füllsubstanz wird bevorzug durch ein Loch bzw. eine Durchgangsöffnung in dem äußeren Klemmkörper von außen in das Lochrohr eingefüllt, wozu ein kleiner Rohrstutzen ausgebildet sein kann.

Weitere Einzelheiten der Erfindung ergeben sich aus der nachfolgenden Beschreibung einer bevorzugten Ausführungsform sowie anhand der Zeichnungen. Dabei zeigen:
- Figur 1: eine Ausführungsform der Vorrichtung bei horizontaler Durchführung eines Glasfaser-Kabels durch eine aus Hohlblocksteinen bestehende angedeutete Wand;

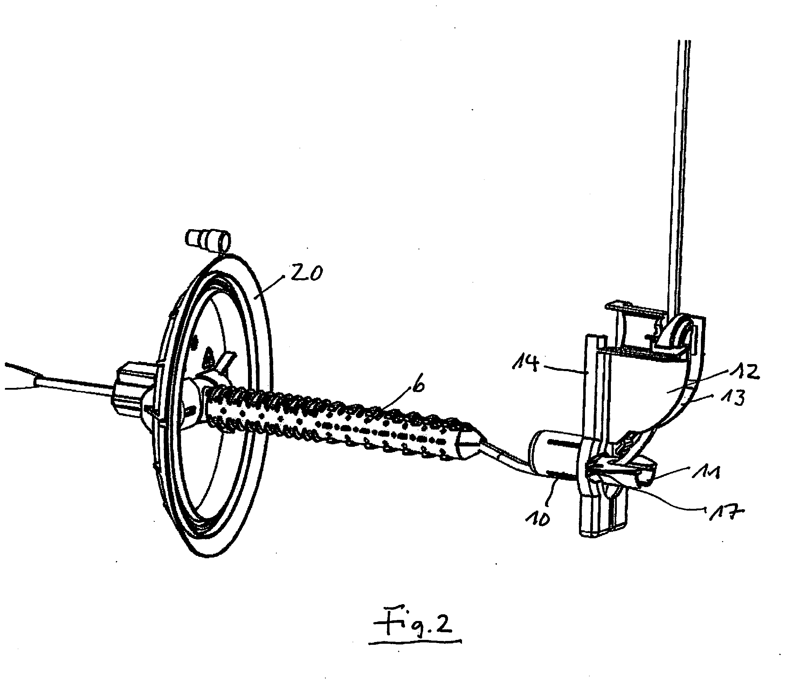

- Figur 2: die Vorrichtung in einer anderen perspektivischen Ansicht;
- Figur 3: eine Zusammenschau einer horizontalen und zwei schrägen Wanddurchführungen der Vorrichtung;
- Figur 4: eine zweite Ausführungsform der erfindungsgemäßen Vorrichtung bei horizontaler Wanddurchführung;
- Figur 5: eine perspektivische Darstellung der Klemmkörper der zweiten Ausführungsform;
- Figur 6: eine andere perspektivische Darstellung der Klemmkörper der zweiten Ausführungsform;
- Figur 7: eine rückwärtige Ansicht des inneren Klemmkörpers;
- Figur 8: den Dichtungskörper des äußeren Klemmkörpers im geöffneten Zustand;
- Figur 9: den Dichtungskörper im geschlossenen Zustand.

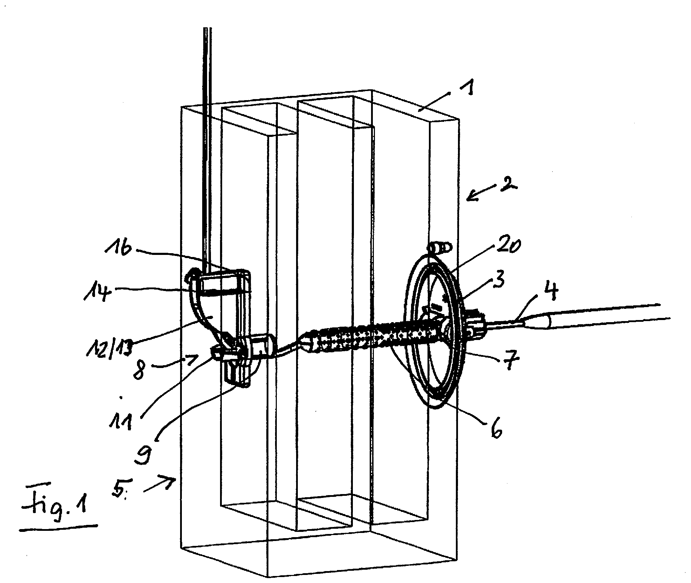

Figur 1 zeigt eine angedeutete Wand 1 aus schematisch dargestellten Hohlblocksteinen. An der Gebäudeaußenseite 2 liegt ein äußerer Klemmkörper 3 an, durch den ein Glasfaser-Kabel ins Innere des Gebäudes eingeführt wird.

Das Glasfaser-Kabel 4 wird durch ein mit kleinen Löchern versehenes Lochrohr 6 hindurchgeführt, das gelenkig an dem äußeren Klemmkörper 3 befestigt ist, so dass das Lochrohr 6 in der Darstellung der Figur 1 nach oben oder unten schwenkbar ist, wenn das Glasfaser-Kabel 4 nicht - wie in Figur 1 - horizontal, sondern schräg aufwärts bzw. abwärts durch die Wand hindurchgeführt werden soll. Das Lochrohr 6 umgibt das Glasfaser-Kabel 4 mit einem radialen Abstand, wobei in den Zwischenraum zwischen dem Glasfaser-Kabel 4 und dem Lochrohr 6 von der Außenseite des äußeren Klemmkörpers 3 her eine zunächst fließfähige, dann aufschäumende und erhärtende Füllsubstanz eingefüllt wird, die aus den Löchern austritt und den Zwischenraum zwischen der nicht dargestellten Wandbohrung und dem Lochrohr 6 ausfüllt. Das Lochrohr 6 verengt sich an seinem freien Ende, so dass dort die Füllsubstanz nicht im großen Umfang austreten kann.

Das Glasfaser-Kabel 4 verläuft zu einem inneren Klemmkörper 8, der einen rohrförmigen Abschnitt 9 hat, der von der Innenseite der Gebäudewand 1 aus in die Wandbohrung eingesetzt wird. Von der Außenseite des rohrförmigen Abschnitts 9 stehen Flügel 10 ab, so dass der rohrförmige Abschnitt 9 nach Art eines Dübels klemmend in die Wandbohrung eingesetzt werden kann.

Das Glasfaser-Kabel 4 wird durch den rohrförmigen Abschnitt 9 zu einem anschließenden rinnenförmigen Abschnitt 11 geführt, aus dem das Glasfaser-Kabel 4 unter Einhaltung eines Mindestbiegeradius nach oben austritt, um zwischen zwei Stegpaare 12, 13 aufgenommen zu werden, die von einem rahmenartigen Abschnitt 14 des inneren Klemmkörpers 8 abstehen.

Der rahmenartige Abschnitt 14 liegt mit seinem Rand 16 in der Einbaulage fest an der Gebäudewand an und dichtet die Wandbohrung ab.

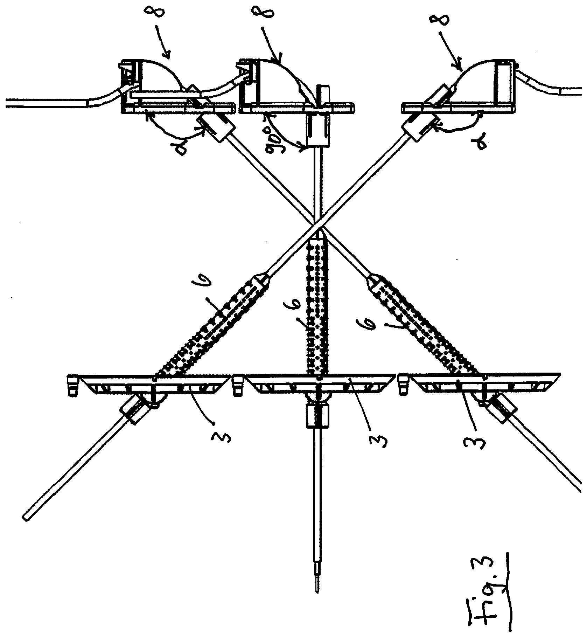

Der rohrförmige Abschnitt 9 mit der anschließenden querschnittlich U-förmigen Verlängerung 11 ist aufgrund seiner Wandstärke im wesentlichen starr, ebenso wie der rahmenförmige Abschnitt 14. Diese beiden weitgehend starren Abschnitte des inneren Klemmkörpers 8 sind durch Verbindungsstege (bei 17) miteinander verbunden, wobei diese Verbindung aufgrund geringerer Wandstärke verformbar bzw. biegbar ist. Dies hat zur Folge, dass der im unbelasteten Zustand und bei horizontaler Wanddurchführung bestehende Winkel von 90° zwischen dem rohrförmigen Abschnitt 9 und dem rahmenartigen Abschnitt 14 verändert werden kann, wenn die Wandbohrung zur Gebäudeinnenseite hin schräg nach oben bzw. nach unten verläuft, wie in Figur 3 durch den Winkel α angedeutet ist. Figur 3 zeigt auch, dass durch die schwenkbare Befestigung des Lochrohres 6 ein entsprechender Winkel an dem äußeren Klemmkörper 3 eingestellt werden kann.

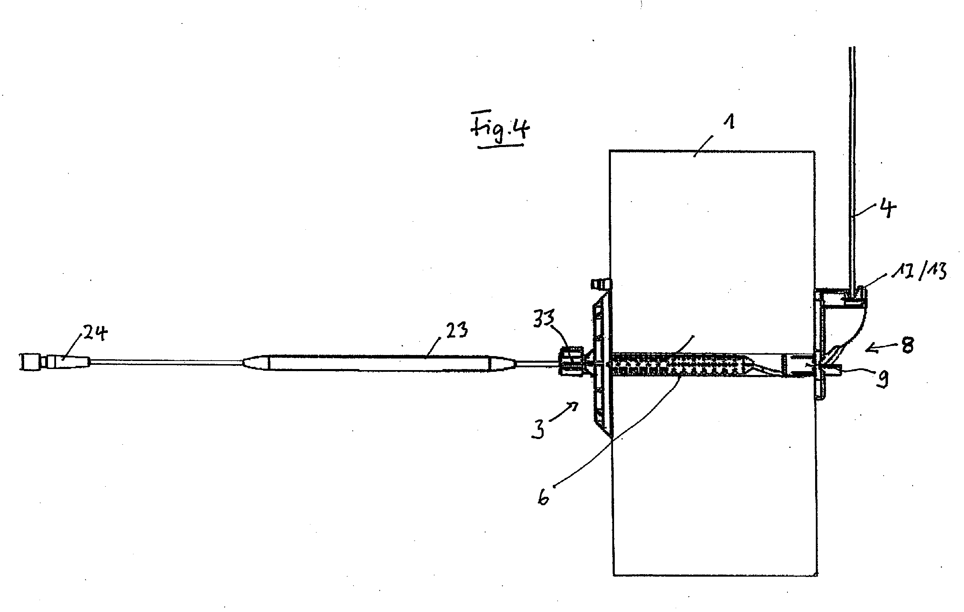

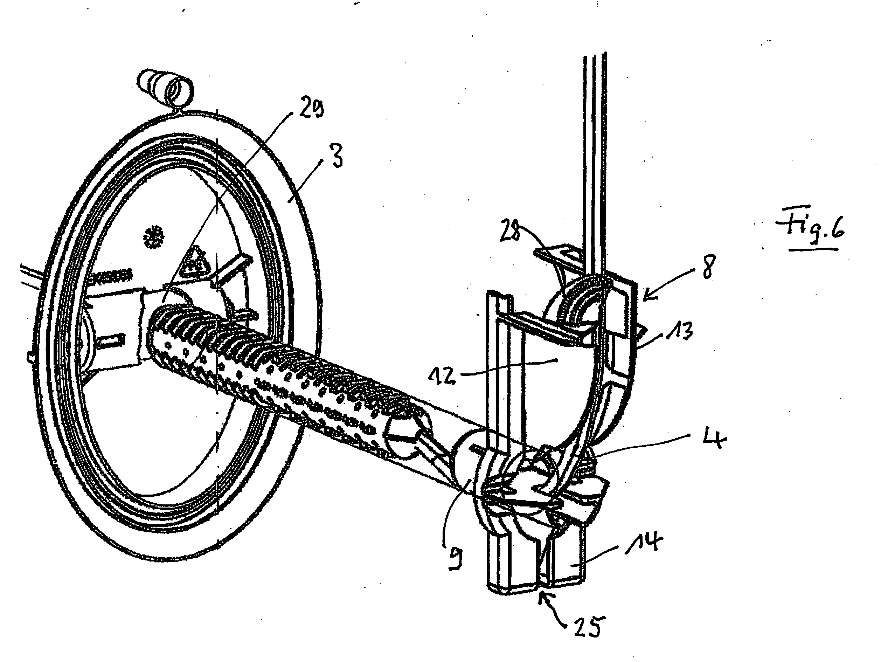

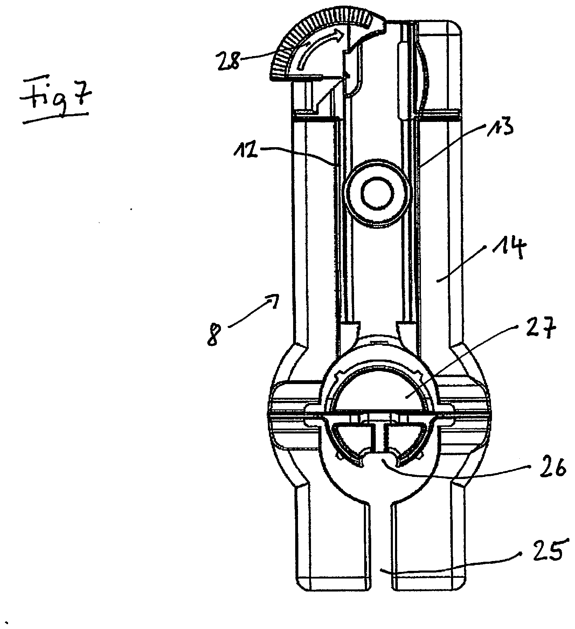

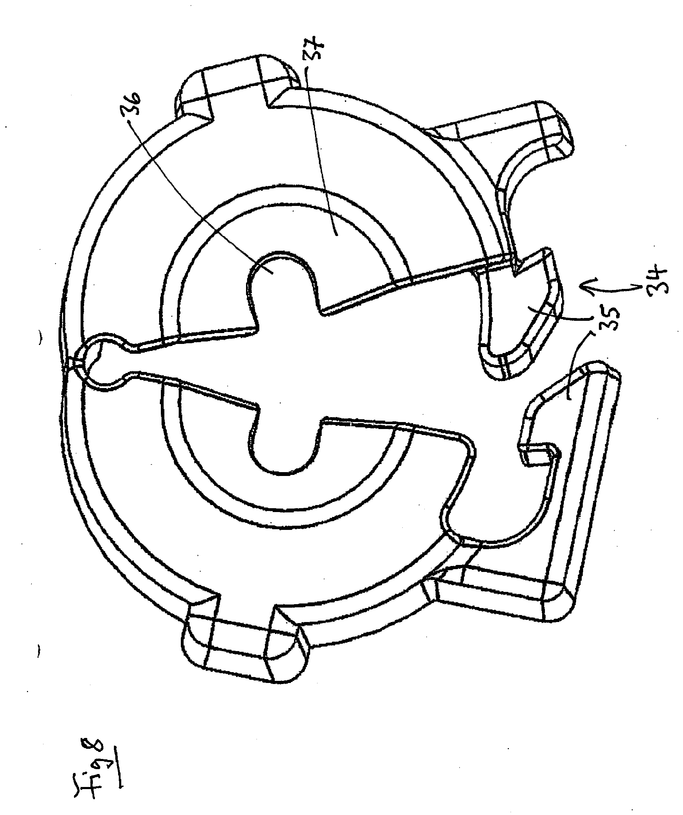

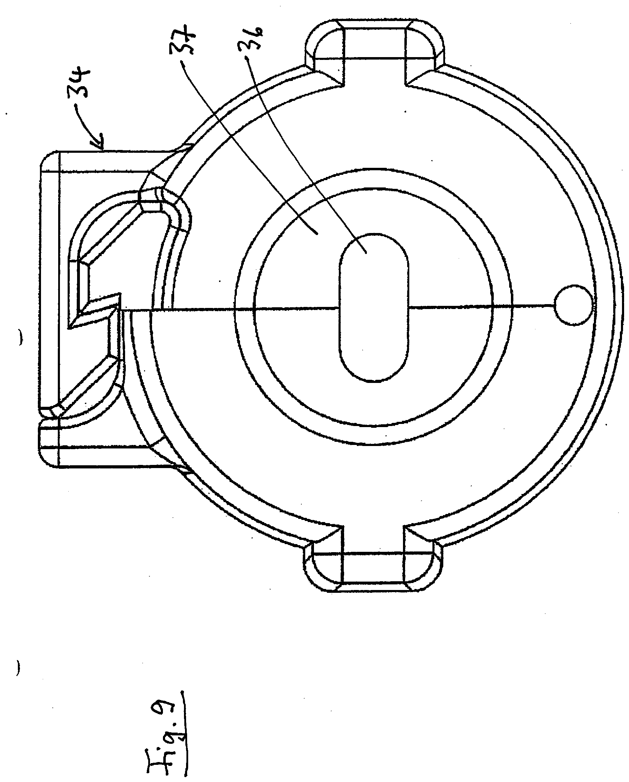

Die Figuren 4 bis 9 zeigen eine Ausführungsform, die verwendet wird, wenn ein Glasfaser-Kabel 4 von der Innenseite einer Gebäudewand 1 durch eine Wandbohrung zur Außenseite geführt wird, wo das Glasfaser-Kabel 4 bereits mit einer Muffe 23 und einem Stecker 24 fest verbunden ist, um an einem an der Außenseite des Gebäudes angeordneten Glasfaser-Abschlusspunkt (nicht dargestellt) angeschlossen zu werden. Das Glasfaser-Kabel 4 ist in diesem Fall bereits an der Innenseite des Gebäudes montiert. Die Muffe 23 und der Stecker 24 haben so große Durchmesser, dass sie nicht durch das Lochrohr in dessen geschlossenen Zustand hindurchgeführt werden können.

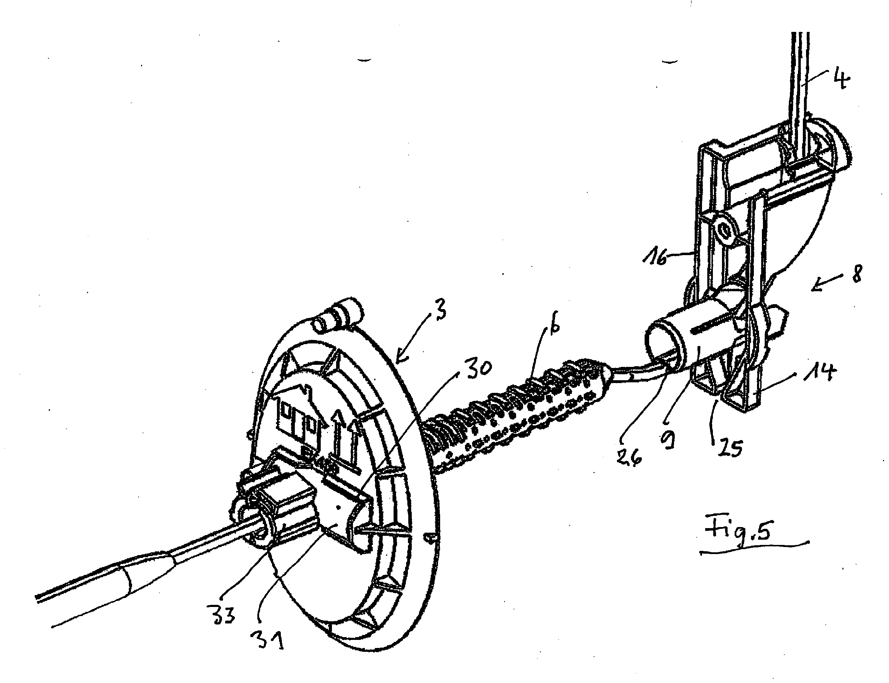

In diesem Fall wird das Glasfaser-Kabel 4 zunächst an der Innenseite des Gebäudes mit dem inneren Klemmkörper 8 zusammengesetzt, indem das im dargestellten Fall ovale Glasfaser-Kabel 4 zwischen den Stegen 12, 13 zu dem rinnenförmigen Abschnitt 11 geführt wird. Der rahmenartige Abschnitt 14 hat - wie Figur 5 zeigt - eine Öffnung 25, durch die das Glasfaser-Kabel 4 zu dem rohrförmigen Abschnitt 9 gelangt, der am unteren Rand eine in Längsrichtung des rohrförmigen Abschnitts 9 verlaufende Einbuchtung 26 enthält, in die das Glasfaser-Kabel eingelegt wird. Der Innenraum des rohrförmigen Abschnitts 9 ist bis auf die Einbuchtung 26 durch eine Innenwand 27 verschlossen. Das im dargestellten Fall ovale Glasfaser-Kabel 4 füllt den Innenraum der Einbuchtung 26 aus, so dass kein aus dem Lochrohr 6 austretendes geschäumtes Füllmaterial aus der Wandbohrung austreten kann, da der rohrförmige Abschnitt 9 die Wandbohrung verschließt. Nach Einlegen des Glasfaser-Kabels 4 zwischen die Stege 12, 13 verhindert ein in die Verschluss-Stellung gedrehtes Element 28 den Austritt des Glasfaser-Kabels aus dem oberen Teil des inneren Klemmkörpers 8.

Das Lochrohr 6 ist um eine Längsachse, die bevorzugt durch ein Filmscharnier gebildet ist, aufklappbar, so dass das Glasfaser-Kabel 4 in das Lochrohr 6 eingelegt werden kann, was außerhalb der Wand 1 geschieht. Der äußere Klemmkörper 3, der eine mittige Durchgangsöffnung 29 hat, wird zuvor über den Stecker 24 und die Muffe 23 zur Außenseite der Wand 1 geführt, bevor das geschlossene Lochrohr 6 mit dem darin aufgenommenen Kabel durch diese mittige Öffnung 29 hindurchgesteckt wird. Neben der Durchgangsöffnung 29 ist eine wannenförmige Vertiefung 30 zur Aufnahme eines an dem Lochrohr 6 angeformten rohrförmigen Gelenks 31 ausgebildet, wodurch das Lochrohr 6 schwenkbar an dem Klemmkörper 3 befestigt ist.

Das geschlossene Lochrohr 6 hat einen über das Gelenk 31 hinaus überstehenden Endabschnitt 32, auf den ein Dichtungskörper 33 aufsetzbar ist. Der Dichtungskörper 33 ist hierzu mittels eines Filmscharniers aufklappbar und durch einen Schnappverschluss 34 verschließbar, bei dem zwei Rastnasen 35 ineinander eingreifen. Der Dichtungskörper 33 ist bis auf eine Durchgangsöffnung 36 für das im dargestellten Fall ovale Glasfaser-Kabel 4 in einer inneren Querwand 37 verschlossen, so dass die später in das Lochrohr 6 eingebrachte schäumende Füllsubstanz dort nicht außen austreten kann.

Es wird betont, dass die Erfindung nicht auf die beschriebenen und dargestellten Ausführungsformen beschränkt ist, Vielmehr sind alle offenbarten Merkmale auf jede sinnvolle Weise einzeln miteinander kombinierbar.

## Patentansprüche

1. Vorrichtung zum Durchführen wenigsten eines Glasfaser-Kabels durch eine durch eine Gebäudewand führende Wandbohrung, mit einem die Wandbohrung an der Gebäudeaußenseite überdeckenden, an der Gebäudewand anliegenden äußeren Klemmkörper (3), der eine Aussparung (29) zum Durchführen des Glasfaser-Kabels (4) hat,
und einem die Bohrung an der Gebäudeinnenseite überdeckenden, an der Gebäudewand anliegenden inneren Klemmkörper (8) zum Durchführen des Glasfaser-Kabels (4),
wobei die Klemmkörper (3, 8) sowohl bei horizontaler als auch im Winkel hierzu durch die Gebäudewand führender Bohrung dicht an die Gebäudewand anpressbar sind,
wobei der innere Klemmkörper (8) einen rohrförmigen Abschnitt (9), der in die Bohrung eingesetzt ist, und einen im unbelasteten Zustand im rechten Winkel dazu verlaufenden rahmenartigen Abschnitt (14) aufweist, der an die Gebäudewand anpressbar ist, wobei die beiden Abschnitte (9, 14) biegbar miteinander verbunden sind, **dadurch gekennzeichnet,**
**dass** in die Aussparung (29) des äußeren Klemmkörpers (3) ein Lochrohr (6) schwenkbar eingesetzt ist, das das hindurch geführte Glasfaser-Kabel (4) in der Bohrung wenigstens über einen Teil seiner Länge mit radialem Abstand umgibt,
**dass** der rohrförmige Abschnitt (9) des inneren Klemmkörpers (8) eine nach außen offene Einbuchtung (25, 26) zur Aufnahme und Führung des Glasfaser-Kabels (4) aufweist, während der übrige innere Querschnitt des rohrförmigen Abschnitts geschlossen ist, und dass das Lochrohr (6) um seine Längsachse aufklappbar ist, so dass der innere Klemmkörper (8), das Lochrohr (6) und der äußere Klemmkörper (3) auf ein zuvor durch die Wandbohrung geführtes Glasfaser-Kabel (4) aufsetzbar sind.

2. Vorrichtung nach Anspruch 1,
**dadurch gekennzeichnet,**
**dass** die beiden Abschnitte (9, 14) des inneren Klemmkörpers (8) durch biegbare Stege (17) miteinander verbunden sind.

3. Vorrichtung nach einem der Ansprüche 1 oder 2,
**dadurch gekennzeichnet,**
**dass** sich der rohrförmige Abschnitt (9) außerhalb der Wandbohrung querschnittlich U-förmig fortsetzt, so dass das Glasfaser-Kabel (4) nach oben austreten kann.

4. Vorrichtung nach einem der Ansprüche 1 bis 3,
**dadurch gekennzeichnet,**
**dass** der rahmenartige Abschnitt (14) beabstandete Stege (12,13) aufweist, zwischen denen das Glasfaser-Kabel (4) hindurchführbar ist.

5. Vorrichtung nach einem der Ansprüche 1 bis 4,
**dadurch gekennzeichnet,**
**dass** das geschlossene Lochrohr (6) mit einem Endabschnitt (32) über den äußeren Klemmkörper (3) hinaus nach außen ragt und
**dass** ein aufklappbarer Dichtungskörper (33) auf den Endabschnitt aufsetzbar ist.

6. Vorrichtung nach Anspruch 5,
**dadurch gekennzeichnet,**
**dass** der Dichtungskörper (33) durch ein Filmscharnier aufklappbar und durch einen Schnappverschluss (35) schliessbar ist.

7. Vorrichtung nach einem der Ansprüche 5 oder 6,
**dadurch gekennzeichnet,**
**dass** der Innenraum des geschlossenen Dichtungskörpers (33) bis auf eine Durchgangsöffnung (36) für das Glasfaser-Kabel (4) durch eine Innenwand (37) abgedichtet ist.

8. Vorrichtung nach einem der Ansprüche 1 bis 7,
**dadurch gekennzeichnet,**
**dass** der äußere Klemmkörper (3) eine Durchgangsöffnung aufweist, durch die eine zunächst fließfähige, dann expandierende und erhärtende Füllsubstanz in das Lochrohr (6) einfüllbar ist.

9. Vorrichtung nach einem der Ansprüche 1 bis 8,
**dadurch gekennzeichnet,**
**dass** der innere und der äußere Klemmkörper (8, 3) und das Lochrohr (6) sowie der Dichtungskörper (33) aus einem thermoplastischen Kunststoff wie ABS bestehen.

## Claims

1. Apparatus for conducting at least one glass fiber cable through a hole leading through a building wall with an outer clamping body (3), which overlaps the hole on the outer side of the building and engages the building wall and has an opening (29) for conducting the glass fiber cable (4), and an inner clamping body (8), which overlaps the hole on the inner side of the building and engages the building wall, for conducting the glass fiber cable (4), wherein the clamping bodies (3, 8) may be pressed tightly against the building wall with the hole extending horizontally and also at an angle thereto through the building wall, wherein the inner clamping body (8) has a tubular section (9), which is inserted into the hole and a frame-like section (14), which extends at right angles thereto, in the unloaded state, and may be pressed against the building wall, wherein the two sections (9, 14) are flexibly connected together, **characterized in that** pivotally inserted into the opening (29) in the outer clamping body (3) there is an apertured tube (6), which surrounds the glass fiber cable (4) passed though in the bore at least over a proportion of its length at a radial spacing, that the tubular section (9) of the inner clamping body (8) has an outwardly open recess (25, 26) for receiving and guiding the glass fiber cable (4) whilst the remainder of the inner cross section of the tubular section is closed and that the apertured tube (6) is foldable about its longitudinal axis so that the inner clamping body (8), the apertured tube (6) and the outer clamping body (3) may be placed onto a glass fibre cable (4) previously passed through the hole in the wall.

2. Apparatus as claimed in Claim 1, characterized that the two sections (9, 14) of the inner clamping body (8), are connected together by flexible webs (17).

3. Apparatus as claimed in one of Claims 1 or 2, **characterized in that** the tubular section (9) continues outside the hole in the wall with a u-shaped cross section so that the glass fiber cable (4) can pass out upwardly.

4. Apparatus as claimed in one of Claims 1 to 3, **characterized in that** the frame-like section (14) includes spaced webs (12, 13) between which the glass fiber cable (4) may be passed.

5. Apparatus as claimed in one of Claims 1 to 4, **characterized in that** the closed apertured tube (6) projects outwardly beyond the outer clamping body (3) with an end section (32) and that a foldable sealing body (33) may be placed on the end section.

6. Apparatus as in Claim 5, **characterized in that** the sealing body (33) is foldable by virtue of an integral hinge and is closable by means of a snap fastener (35).

7. Apparatus as claimed in any of Claims 5 or 6, **characterized in that** the interior of the closed sealing body (33) is sealed by an inner wall (37) apart from a through opening (36) for the glass fiber cable (4).

8. Apparatus as claimed in any of Claims 1 to 7, **characterized in that** the outer body (3) has a through opening, through which a filler material, which is initially flowable and then expands and sets, may be poured into the apertured tube (6).

9. Apparatus as claimed in any one of Claims 1 to 8, **characterized in that** the inner and outer clamping bodies (8, 3) and the apertured tube (6) and also the sealing body (33) consist of a themoplastic plastic material, such as ABS.

## Revendications

1. Dispositif pour faire passer au moins un câble à fibres optiques à travers un trou de paroi traversant une paroi de bâtiment, avec un corps de serrage extérieur (3) recouvrant le trou de paroi sur la face extérieure de bâtiment, s'appliquant sur la paroi de bâtiment, qui possède un évidement (29) pour faire passer le câble à fibres optiques (4),
et un corps de serrage intérieur (8) recouvrant le trou sur la face intérieure de bâtiment, s'appliquant sur la paroi de bâtiment pour faire passer le câble à fibres optiques (4),
dans lequel les corps de serrage (3, 8) peuvent être pressés de manière serrée sur la paroi de bâtiment lorsque le trou traversant la paroi de bâtiment est aussi bien horizontal qu'à angle par rapport à ceux-ci,
dans lequel le corps de serrage intérieur (8) présente une partie tubulaire (9), qui est insérée dans le trou, et une partie de type cadre (14) s'étendant à angle droit par rapport à celle-ci dans l'état non sollicité, qui peut être pressée sur la paroi de bâtiment, dans lequel les deux parties (9, 14) sont reliées l'une à l'autre de manière flexible, **caractérisé en ce qu'**un tube perforé (6) est inséré de manière pivotante dans l'évidement (29) du corps de serrage extérieur (3), qui entoure le câble à fibres optiques (4) guidé à travers dans le trou au moins sur une partie de sa longueur avec une distance radiale,
que la partie tubulaire (9) du corps de serrage intérieur (8) présente un creux (25, 26) ouvert vers l'extérieur pour la réception et le guidage du câble à fibres optiques (4), tandis que le reste de la section transversale intérieure de la partie tubulaire est fermé, et que le trou perforé (6) peut être ouvert autour de son axe longitudinal, de sorte que le corps de serrage intérieur (8), le trou perforé (6) et le corps de serrage extérieur (3) peuvent être placés sur un câble à fibres optiques (4) préalablement guidé à travers le trou de paroi.

2. Dispositif selon la revendication 1,
**caractérisé en ce**
**que** les deux parties (9, 14) du corps de serrage intérieur (8) sont reliées l'une à l'autre par des éléments jointifs (17) flexibles.

3. Dispositif selon l'une quelconque des revendications 1 ou 2,
**caractérisé en ce**
**que** la partie tubulaire (9) se prolonge en forme de U en section transversale à l'extérieur du trou de paroi, de sorte que le câble à fibres optiques (4) peut sortir vers le haut.

4. Dispositif selon l'une quelconque des revendications 1 à 3,
**caractérisé en ce**
**que** la partie de type cadre (14) présente des éléments jointifs (13, 13) espacés, entre lesquels le câble à fibres optiques (4) peut être guidé.

5. Dispositif selon l'une quelconque des revendications 1 à 4,
**caractérisé en ce**
**que** le tube perforé (6) fermé fait saillie avec une partie d'extrémité (32) du corps de serrage extérieur (3) vers l'extérieur et
**que** le corps d'étanchéité (33) pouvant être ouvert peut être placé sur la partie d'extrémité (32).

6. Dispositif selon la revendication 5,
**caractérisé en ce**
**que** le corps d'étanchéité (33) peut être ouvert par un film-charnière et peut être fermé par une fermeture à déclic (35).

7. Dispositif selon l'une quelconque des revendications 5 ou 6,
**caractérisé en ce**
**que** l'espace intérieur du corps d'étanchéité (33) fermé est étanchéifié par une paroi intérieure (37) jusqu'à une ouverture de passage (36) pour le câble à fibres optiques (4).

8. Dispositif selon l'une quelconque des revendications 1 à 7,
**caractérisé en ce**
**que** le corps de serrage extérieur (3) présente une ouverture de passage, à travers laquelle une substance de remplissage tout d'abord coulante, puis se dilatant et durcissant, peut être versée dans le tube perforé (6).

9. Dispositif selon l'une quelconque des revendications 1 à 8,
**caractérisé en ce**
**que** le corps de serrage intérieur et l'extérieur (8, 3) et le tube perforé (6) ainsi que le corps d'étanchéité (33) sont constitués d'un thermoplastique tel que l'ABS.
